Europäisches Patentamt

European Patent Office

Office européen des brevets

(11) Publication number: **0 297 143**
**A1**

# EUROPEAN PATENT APPLICATION

published in accordance with Art. 158(3) EPC

(21) Application number: 88900116.0

(22) Date of filing: 18.12.87

Data of the international application taken as a basis:

(86) International application number:
PCT/JP87/00994

(87) International publication number:
WO88/04800 (30.06.88 88/14)

(51) Int. Cl.³: **G 05 D 1/02**

(30) Priority: 19.12.86 JP 303019/86

(43) Date of publication of application:
04.01.89 Bulletin 89/1

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: TOYODA, Kenichi
17-25, Shinmei 1-chome
Hino-shi Tokyo 191(JP)

(72) Inventor: INABA, Chukun
32-5, Asagayakita 3-chome
Suginami-ku Tokyo 166(JP)

(74) Representative: Billington, Lawrence Emlyn et al,
HASELTINE LAKE & CO Hazlitt House 28 Southampton
Buildings Chancery Lane
London WC2A 1AT(GB)

(54) APPARATUS FOR GUIDING A SELF-RUNNING ROBOT.

(57) An apparatus for guiding a self-running robot wherein the self-running robot placed on a cart is moved from one cell to another cell by supplying a signal current to a guide wire installed through the individual machining cells, to carry out a predetermined machining. The guide wire (c) in which a signal current flows to drive the self-running robot (b) is divided by nodes (h) that are provided at positions that correspond to the cells, the node map is stored in the memory of a computer (e), and the signal current is supplied only between required nodes from a cell control unit (g) to guide the self-running robot (b).

0297143

TITLE MODIFIED

DESCRIPTION

SELF-PROPELLED ROBOT GUIDANCE APPARATUS

Technical Field

This invention relates to a self-propelled robot guidance apparatus for guiding a self-propelled robot along a guide wire arranged between machining cells.

Background Art

At factories where unmanned FA (factory automation) systems have been introduced, various activities performed by robot are executed at a plurality of machining cells disposed within the factory. Accordingly, various self-propelled robot guidance apparatus have been developed for operating a robot set upon a car as well as an object to be controlled, such as as a machine tool, provided at each machining cell.

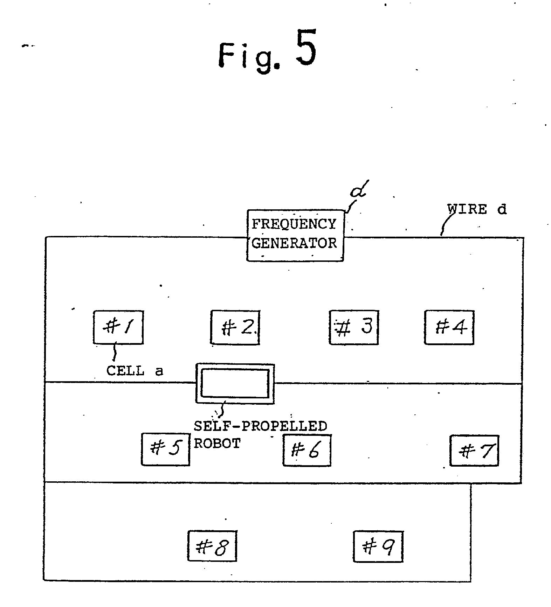

Fig. 5 is a block diagram illustrating machining cells #1 - #9 arranged in such a factory and an example of a wire arrangement.

In order to guide a self-propelled robot b from any of a plurality of machining cells a to a target cell a, a frequency generator d is connected to a guide wire c arranged on the factory floor, and a guidance signal having a predetermined frequency is supplied to guide wire c. The self-propelled robot b, which is a robot placed on a car, has its traveling sequence from one cell a to another as well as its activities instructed by a computer, not shown. Various machine tools are set up at the cells a. For example, the self-propelled robot b is moved from the #2 cell a to the #8 cell a to subject a workpiece to a series of predetermined processes.

A magnet for sensing purposes is embedded in the vicinity of each cell a. When the self-propelled robot b senses the position of a designated cell a, the leg of a cone is pulled out to stop the robot, a connector provided at the cell a and a connector on the self-propelled robot b are connected, and electricity and pneumatic pressure for driving the robot b are supplied.

Since this conventional apparatus for guiding the self-propelled robot b feeds a signal current to the guide wire c at all times, there is a large power loss when the wire is of great length.

Furthermore, if the car reads the position of a machining cell a erroneously, the self-propelled robot b is likely to race pass a cell or be sent to a cell a different from the target cell a. There is the danger that the robot hand or workpiece may be damaged or the cell a destroyed.

Disclosure of the Invention

The present invention has been devised to solve the foregoing problems and its object is to provide a self-propelled robot guidance apparatus that reduces power consumption and enables the robot to be positively coupled to a target machining cell.

-3-

In accordance with the present invention, there is provided a self-propelled robot guidance apparatus for guiding a robot, which has been placed on a car, among a plurality of machining cells by the car, and controlling the robot in such a manner that activities for prescribed ones of the machining cells are performed sequentially, comprising a guide wire in which a signal current for guiding the car is divided by nodes at the cell positions, stop control means for controlling the stopping of the car in the vicinity of each of the machining cells, processing means for storing a node mape of the guide wire and deciding a shortest route for movement of the car, and control means for passing a signal current only between nodes that have been decided.

Accordingly, with the self-propelled robot guidance apparatus of the present invention, the self-propelled robot placed on the car is moved from a certain cell to another cell by applying a signal current to the guide wire arranged between machining cells. When a predetermined machining process is carried out, the guide wire through which the signal current is passed for driving the self-propelled robot is divided at the nodes provided at the positions corresponding to the cells, the node map is stored in the memory of a computer in advance, and the signal current is supplied only between the required nodes by a cell control unit. As a result, power consumption is

-4-

reduced, the self-propelled robot can be reliably coupled to the proper cell, and both runaway of the self-propelled robot and destruction of the cells can be prevented.

Brief Description of the Drawings

Fig. 1 is a block diagram illustrating the general construction of the present invention, Fig. 2 is a view for describing a node map, Figs. 3 and 4 are flowcharts, and Fig. 5 if a block diagram showing an example of the prior art.

Best Mode for Carrying Out the Invention

An embodiment of the present invention will now be described in detail with reference to the drawings.

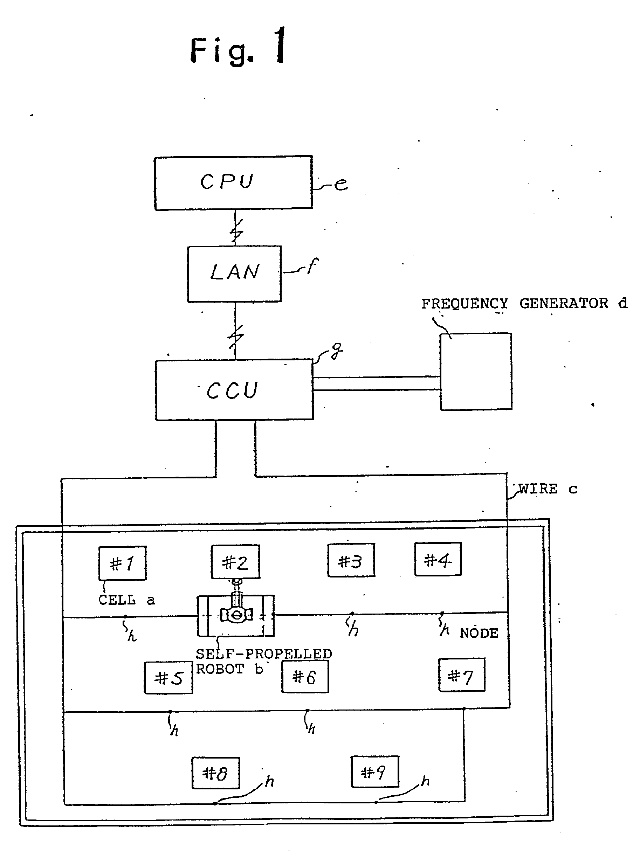

Fig. 1 is a block diagram illustrating the general construction of the invention. As shown in the Figure, a guide wire c connecting the machining cells a and laid on a floor in such a manner that the self-propelled robot b may run thereon has a node (contact) h at a position corresponding to each cell a. The wiring interconnecting the nodes h is connected to the frequency generator d via a cell control unit (CCU) g comprising a programmable controller or the like. The overall system is controlled by a computer CPU e, and the CPU e and CCU g are connected via a local area network (LAN) f. The LAN f, CPU e and CCU g are interconnected by an optical cable.

In the present invention, the arrangement is such that a signal current is supplied only to nodes h between cells a to which the self-propelled robot b is moved. For example, if the self-propelled robot b is to be moved from the #2 cell a to the #4 cell a, the signal current from the frequency generator d is supplied only between the nodes h of the wire c between the #2 cell a and the #4 cell a in accordance with a node map, described next.

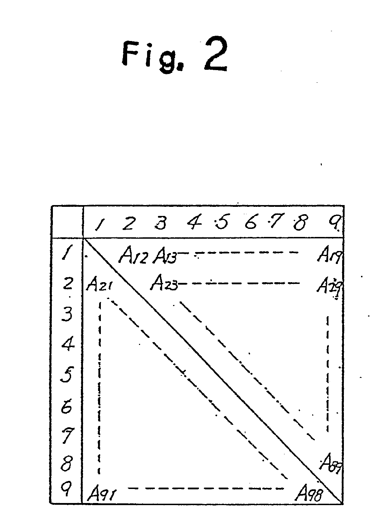

Fig. 2 is a view illustrating an example of a node map. Distances $A_{ij}$ corresponding to guidance paths previously stored in the CPU e are read out of a table sequentially. More specifically, if the self-propelled robot b is to be moved from the #1 to the #7 cell a, a travel path $A_{17} = A_{15} + A_{56} + A_{67}$ connecting nodes defining the shortest traveling distance is decided. Based on this path, the CCU g applies a control signal to the nodes h at the positions of the corresponding cells a, and a signal current is supplied to the guide wire c between these cells. Similarly, if the self-propelled robot b is to be moved from the #2 to the #8 cell a, $A_{28} = A_{21} + A_{18}$ is decided as the travel path and the signal current is supplied to the wire between the corresponding nodes h.

Thus, in accordance with a conveyance priority decision system, the CPU e computes the shortest node path corresponding to the lead cell of the queue and controls the movement of the self-propelled robot b.

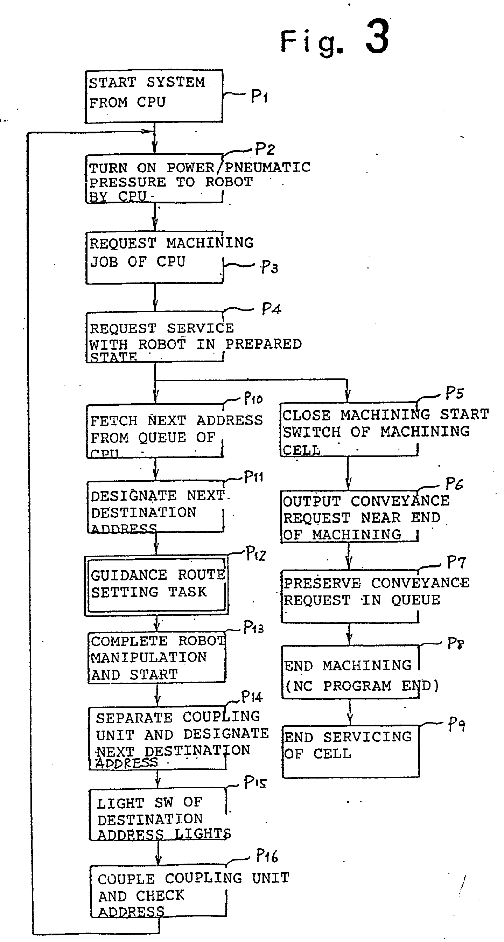

Fig. 3 is a flowchart illustrating a processing procedure in the guidance apparatus of the present invention.  This flowchart will now be described.

(1)  Processing for robot machining preparation

The system is started from the CPU e (step Pl).
The CCU g actuates a power supply and pneumatic
pressure for driving the robot b provided at the
connector of each cell a (step P2).  Next, the CCU g
requests a pertinent machining job of the CPU 3 (step
P3) and a service is requested with the robot b in a
state where preparations have been completed.

(2)  Robot service at machining cell

A machining start switch at a corresponding
machining cell a is closed (step P5), and a request for
conveying the self-propelled robot b is outputted near
the end of machining (step P6).  This conveyance
request is preserved in the queue of the CPU e (step
P7).  Next, at NC program end, machining at the cell a
is completed (step P8) and the CCU g ends the servicing
of this cell a (step P9).

(3)  Destination control

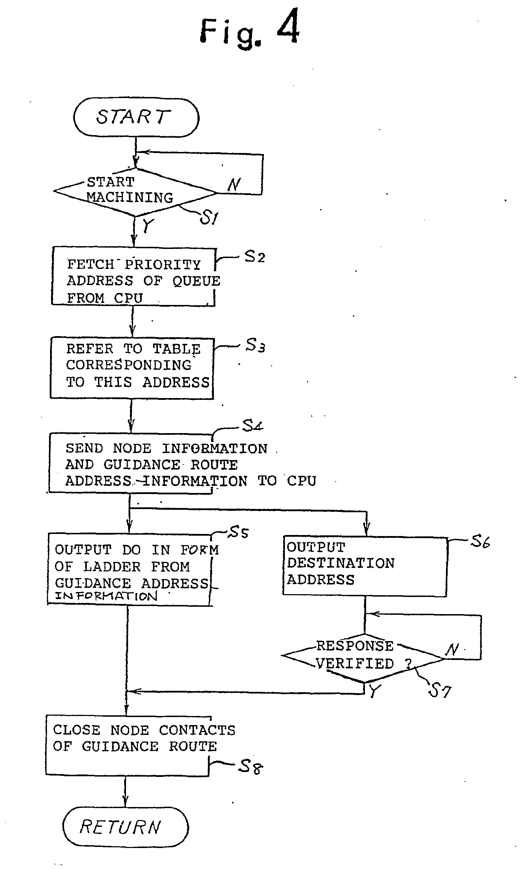

The next address is fetched from the queue of the
CPU e (step P10) and the address of the next
destination of the robot b is designated (P11).  Next,
a lead wire setting task, the details of which are
described in the flowchart of Fig. 4, is executed (step
P12).  When the service performed by the robot is
completed, the self-propelled robot b is started (step
P13), the coupling unit is uncoupled and the next
destination address is designated (step P14).  Next, after a light switch of the destination address is lights (step P15), the self-propelled robot b is coupled to the coupling unit of the pertinent cell a and the address is checked (step P16).

Fig. 4 is a flowchart illustrating the details of the guidance route setting task of step P12 in Fig. 3. This flowchart will now be described.

The program is started and the start of machining is verified (step S1), and the priority address of the queue is fetched from the CPU e (step S2). Next, the shortest route is decided (step S3) by referring to the distance table (see Fig. 2) corresponding to this address, and the node information and guidance route address information is sent to the CCU g (step S4). A control signal for each node h is then outputted in the form of a ladder from the address information (step S5). A destination address is outputted to the car side (step S6), a response is verified (step S7) and the contact points of the nodes h of the guidance route are closed simultaneously (step S8).

Though an embodiment of the present invention has been described, the invention is not limited thereto but can be modified in various ways without departing from the scope of the claims.

Industrial Applicability

The self-propelled robot guidance apparatus can be utilized in an FA system so adapted that various activities for a plurality of machining cells installed

0297143

in a factory are performed by a robot.

CLAIMS:

1. A self-propelled robot guidance apparatus for guiding a robot, which has been placed on a car, among a plurality of machining cells by the car, and controlling the robot in such a manner that activities for prescribed ones of the machining cells are performed sequentially, comprising a guide wire in which a signal current for guiding the car is divided by nodes at the cell positions, stop control means for controlling stopping of the car in the vicinity of each of said machining cells, processing means for storing a node mape of the guide wire and deciding a shortest route for movement of said car, and control means for passing a signal current only between nodes that have been decided.

2. A self-propelled robot guidance apparatus according to claim 1, wherein said processing means outputs guidance route address information to said control means to control each node of the guide wire, and passes a signal current after a response is received when the car is moved.

3. A self-propelled robot guidance apparatus according to claim 1, wherein said processing means and said control means are connected by an optical cable.

# Fig. 1

# Fig. 2

0297143

# Fig. 3

START SYSTEM
FROM CPU — P₁

↓

TURN ON POWER/PNEUMATIC
PRESSURE TO ROBOT
BY CPU — P₂

↓

REQUEST MACHINING
JOB OF CPU — P₃

↓

REQUEST SERVICE
WITH ROBOT IN PREPARED
STATE — P₄

```
         ┌──────────────────┬──────────────────┐
         ↓                                     ↓
```

FETCH NEXT ADDRESS
FROM QUEUE OF
CPU — P₁₀

CLOSE MACHINING START
SWITCH OF MACHINING
CELL — P₅

↓

DESIGNATE NEXT
DESTINATION
ADDRESS — P₁₁

OUTPUT CONVEYANCE
REQUEST NEAR END
OF MACHINING — P₆

↓

GUIDANCE ROUTE
SETTING TASK — P₁₂

PRESERVE CONVEYANCE
REQUEST IN QUEUE — P₇

↓

COMPLETE ROBOT
MANIPULATION
AND START — P₁₃

END MACHINING
(NC PROGRAM END) — P₈

↓

SEPARATE COUPLING
UNIT AND DESIGNATE
NEXT DESTINATION
ADDRESS — P₁₄

END SERVICING
OF CELL — P₉

↓

LIGHT SW OF
DESTINATION
ADDRESS LIGHTS — P₁₅

↓

COUPLE COUPLING UNIT
AND CHECK
ADDRESS — P₁₆

# Fig. 4

```
                    ┌─────────────┐
                    │    START    │
                    └─────────────┘
                           │
                           │ ◄──────────────────┐
                          ╱╲                     │
                        ╱  START ╲    N          │
                       ╱ MACHINING ╲────────────┘
                        ╲          ╱  S1
                          ╲      ╱
                            ╲  ╱
                           Y │
                             ▼
                    ┌─────────────────┐ ── S2
                    │ FETCH PRIORITY  │
                    │ ADDRESS OF QUEUE│
                    │ FROM CPU        │
                    └─────────────────┘
                             │
                             ▼
                    ┌─────────────────┐ ── S3
                    │ REFER TO TABLE  │
                    │ CORRESPONDING   │
                    │ TO THIS ADDRESS │
                    └─────────────────┘
                             │
                             ▼          ── S4
                    ┌──────────────────────────┐
                    │ SEND NODE INFORMATION     │
                    │ AND GUIDANCE ROUTE        │
                    │ ADDRESS INFORMATION TO CPU│
                    └──────────────────────────┘
                       │                    │
                       ▼  ── S5             ▼  ── S6
            ┌──────────────────┐   ┌──────────────┐
            │ OUTPUT DO IN FORM│   │ OUTPUT       │
            │ OF LADDER FROM   │   │ DESTINATION  │
            │ GUIDANCE ADDRESS │   │ ADDRESS      │
            │ INFORMATION      │   └──────────────┘
            └──────────────────┘          │
                       │                  ▼  ◄─────┐
                       │                 ╱╲        │
                       │               ╱RESPONSE╲ N│
                       │              ╱ VERIFIED ? ╲┘
                       │               ╲          ╱  S7
                       │                 ╲      ╱
                       │                   ╲  ╱
                       │ ◄────────────────Y │
                       ▼
            ┌──────────────────┐
            │ CLOSE NODE CONTACTS│
            │ OF GUIDANCE ROUTE  │
            │              ── S8 │
            └──────────────────┘
                       │
                       ▼
                ┌─────────────┐
                │   RETURN    │
                └─────────────┘
```

# Fig. 5

FREQUENCY GENERATOR *d*

WIRE d

#1   #2   #3   #4

CELL a

SELF-PROPELLED ROBOT

#5   #6   #7

#8   #9

# INTERNATIONAL SEARCH REPORT

0297143

International Application No  PCT/JP87/00994

## I. CLASSIFICATION OF SUBJECT MATTER (if several classification symbols apply, indicate all) ³

According to International Patent Classification (IPC) or to both National Classification and IPC

Int.Cl⁴  G05D1/02

## II. FIELDS SEARCHED

### Minimum Documentation Searched ⁴

| Classification System | Classification Symbols |
|---|---|
| IPC | G05D1/02 |

### Documentation Searched other than Minimum Documentation
to the Extent that such Documents are Included in the Fields Searched ⁵

| | |
|---|---|
| Jitsuyo Shinan Koho | 1932 – 1987 |
| Kokai Jitsuyo Shinan Koho | 1971 – 1987 |

## III. DOCUMENTS CONSIDERED TO BE RELEVANT ¹⁴

| Category * | Citation of Document, ¹⁶ with indication, where appropriate, of the relevant passages ¹⁷ | Relevant to Claim No. ¹⁸ |
|---|---|---|
| Y | JP, A, 57-55404 (Mitsubishi Electric Corporation) 2 April 1982 (02. 04. 82) (Family: none) | 1-3 |
| Y | JP, U, 60-109108 (Taito Kabushiki Kaisha) 24 July 1985 (24. 07. 85) (Family: none) | 1-3 |

* Special categories of cited documents: ¹⁶

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| March 3, 1988 (03. 03. 87) | March 22, 1988 (22. 03. 88) |
| International Searching Authority ¹ | Signature of Authorized Officer ²⁰ |
| Japanese Patent Office | |

Form PCT/ISA/210 (second sheet) (October 1977)